# EUROPÄISCHE PATENTSCHRIFT

(11) **EP 4 279 655 B1**
(45) Veröffentlichungstag und Bekanntmachung des Hinweises auf die Patenterteilung: **08.05.2024**
(21) Anmeldenummer: 22174214.1
(22) Anmeldetag: 19.05.2022
(51) Int. Cl.: D21H 19/20, B32B 29/00, B32B 38/06, D21H 19/68, D21H 19/82, D21H 25/04, D21H 25/06, D21H 27/02, D21H 27/18

(54) **VERFAHREN ZUR HERSTELLUNG EINES STRUKTURGEBERS ZUM TEXTURIEREN EINER PRÄGEFÄHIGEN MATERIALOBERFLÄCHE, INSBESONDERE HARZHALTIGEN LAMINATOBERFLÄCHE, UND DERARTIGER STRUKTURGEBER**
METHOD FOR PRODUCING A STRUCTURE ENHANCER FOR TEXTURING AN EMBOSSABLE MATERIAL SURFACE, IN PARTICULAR A RESIN-CONTAINING LAMINATE SURFACE, AND SUCH A STRUCTURE ENHANCER
PROCÉDÉ DE FABRICATION D'UN AGENT STRUCTURANT PERMETTANT DE TEXTURER UNE SURFACE DE MATIÈRE POUVANT ÊTRE ESTAMPÉE, EN PARTICULIER UNE SURFACE STRATIFIÉE CONTENANT DE LA RÉSINE, ET AGENT STRUCTURANT CORRESPONDANT

(43) Veröffentlichungstag der Anmeldung: 22.11.2023
(73) Patentinhaber: Fritz Egger GmbH & Co. OG, 6380 St. Johann in Tirol (AT)
(72) Erfinder: Kemmerling, Frank, 59929 Brilon (DE)
(74) Vertreter: Cohausz & Florack

(56) Entgegenhaltungen:
- EP-A1- 3 345 761
- US-A1- 2019 310 546

## Beschreibung

Die Erfindung betrifft ein Verfahren zur Herstellung eines Strukturgebers zum Texturieren einer prägefähigen Materialoberfläche, insbesondere harzhaltigen Laminatoberfläche, umfassend die Schritte: Bereitstellen eines bahnförmigen Trägermaterials aus Papier und/oder Kunststoff, Aufbringen einer UV-härtbaren Lackschicht aus acryliertem Oligomer auf das Trägermaterial, Formen einer dreidimensionalen Prägestruktur in die auf das Trägermaterial aufgebrachte Lackschicht und Härten der Lackschicht durch Bestrahlung mit energiereicher Strahlung, vorzugsweise UV-Licht, während des Formens der Prägestruktur.

Unter einer Bestrahlung mit energiereicher Strahlung werden im Kontext der vorliegenden Erfindung insbesondere eine Bestrahlung mit UV-Strahlen (UV-Licht) und auch eine Bestrahlung mit Elektronenstrahlen verstanden.

Des Weiteren betrifft die Erfindung einen Strukturgeber zum Texturieren einer prägefähigen Materialoberfläche, insbesondere harzhaltigen Laminatoberfläche, insbesondere hergestellt nach dem erfindungsgemäßen Verfahren, mit einem bahnförmigen Trägermaterial aus Papier und/oder Kunststoff und einer auf dem Trägermaterial aufgebrachten Lackschicht aus acryliertem Oligomer, die eine dreidimensionale Prägestruktur aufweist. Der Strukturgeber kann auch als Prägematrize bezeichnet werden.

Im Stand der Technik sind dekorative Laminate bekannt, die beispielsweise als Fußbodenbelag oder als Oberflächenmaterial für Wände, Decken oder Möbel wie Schränke, Arbeits- und Tischplatten oder ähnliches verwendet werden. Derartige Laminate sind üblicherweise aus einem Substrat, z. B. einer MDF- oder HDF-Platte oder harzgetränkten Papierlagen, einer Dekorschicht und einer darauf aufgebrachten transparenten Schutzschicht aufgebaut. Die Schutzschicht soll die Dekorschicht vor Verschleiß, insbesondere Abrieb schützen. Beispielsweise weisen klassische Fußbodenlaminatpaneele ein Melaminharz-imprägniertes, transparent aushärtendes Overlaypapier als Schutzschicht auf. Das Material der Schutzschicht enthält dabei häufig die Verschleißfestigkeit erhöhende Partikel, zum Beispiel Quarz- oder Korund-Partikel.

Um mit dekorativen Laminaten natürliche Materialien wie zum Beispiel Holzdielen oder Steinplatten in optischer sowie in haptischer Hinsicht naturgetreu nachzuahmen, werden solche Laminate im Stand der Technik mit einer dreidimensionalen Oberflächenstruktur versehen, die vorzugsweise mit dem Druckbild der Dekorschicht des Laminats korrespondiert. Beispielsweise werden zur Nachahmung von Holzdielen beim Verpressen eines ein Holzdekorpapier aufweisenden Laminataufbaus Vertiefungen in die transparente Schutzschicht eingepresst, wobei die Vertiefungen im Wesentlichen in Überdeckung zu in dem Holzdekor abgebildeten Holzporen liegen. Derartige Vertiefungen, die korrespondierend zu abgebildeten Poren ausgebildet sind, werden in Fachkreisen auch als Synchronporen bezeichnet.

Auch sind im Stand der Technik dekorative Laminate mit Fantasie- oder einfarbigen Dekoren (Unidekoren) bekannt, zum Beispiel solche Laminate für Arbeits- oder Tischplatten, deren transparente Schutzschicht oder oberste Schicht mit einer dreidimensionalen Oberflächenstruktur versehen ist.

Zur Herstellung von Laminaten mit dreidimensionaler Oberflächenstruktur werden im Stand der Technik beispielsweise Pressbleche verwendet, die eine durch Gravieren erzeugte Oberflächenstruktur aufweisen. Das Laminat wird dabei mittels einer sogenannten Kurztaktpresse (KT-Presse) unter hohem Druck und hoher Temperatur hergestellt, wobei das gravierte Pressblech auf einer der transparent aushärtenden Schutzschicht zugewandten Pressenplatte montiert ist. Beim Verpressen des Laminats herrschen Temperaturen von z. B. über 120° C und ein Druck von über 50 bar. Die Herstellung gravierter Pressbleche ist kostenaufwendig. Zudem sind die Pressbleche durch die hohe Druckbeanspruchung erheblichem Verschleiß unterworfen.

Des Weiteren ist es im Stand der Technik bekannt, harzgetränkte Laminatoberflächen mittels bahnförmiger Strukturgeber - auch Prägematrizen genannt - unter Anwendung von Druck und Temperatur zu texturieren, d.h. die Laminatoberfläche mit einer dreidimensionalen Oberflächenstruktur zu versehen.

Ein Verfahren zur Herstellung eines solchen bahnförmigen Strukturgebers ist beispielsweise in der EP 2 146 805 beschrieben. Das Verfahren sieht vor, eine aushärtbare Beschichtung auf eine bahnförmige Kunststofffolie aufzubringen und anschließend mit einer Strukturwalze in Kontakt zu bringen. Während des Kontakts mit der Strukturwalze wird die Beschichtung mittels Elektronen- oder UV-Strahlung ausgehärtet, so dass sich die dreidimensionale Struktur dauerhaft in die Beschichtung der Kunststofffolie überträgt. Die ausgehärtete Beschichtung wird dann zusammen mit der Kunststofffolie von der Strukturwalze entfernt. Die Beschichtung enthält dabei, vor dem Härten, 20 bis 50% eines Acryl-Oligomers, 15 bis 35% eines monofunktionalen Monomers und 20 bis 50% eines multifunktionalen Monomers zum Vernetzen. Eine Aushärtung der Beschichtung mittels Elektronen-Strahlung ist mit hohen Investitionskosten und einem hohen Energieverbrauch verbunden. Ferner hat sich beim Nacharbeiten des Verfahrens nach EP 2 146 805 gezeigt, dass oftmals die Haftung verschiedener Harze oder strahlenhärtender Lacke auf dem bahnförmigen Trägermaterial ungenügend ist, so dass sich ein Teil des Harzes oder Lacks in der Struktur der Strukturwalze ablegt und dort aushärtet. Dies hat zur Folge, dass sich sodann ein sich wiederholender Oberflächenfehler in der ausgehärteten Beschichtung auf dem bahnförmigen Trägermaterial abzeichnet. Die Reinigung der Strukturwalze, so dass Harz- oder Lackablagerungen aus deren Struktur vollständig entfernt werden, ist sehr aufwendig.

Die EP 3 720 673 offenbart ein weiteres Verfahren zur Übertragung einer Prägestruktur auf wenigstens einen Teil einer Oberfläche eines Beschichtungsmittels. Die wesentlichen Schritte des Verfahrens werden unter Verwendung eines als Prägematrize eines Prägewerkzeugs eingesetzten Verbundes aus einem Substrat und einer geprägten und zumindest teilweise ausgehärteten Beschichtung durchgeführt. Das zur Herstellung der Beschichtung des Verbundes eingesetzte Beschichtungsmittel ist ein strahlenhärtbares Beschichtungsmittel definierter Zusammensetzung. Die EP 3 720 673 lehrt, dass sich zwischen dem Substrat und der Beschichtung des Verbunds vorzugsweise keine weitere Schicht befindet. Interne Versuche haben jedoch ergeben, dass sich mit dem Verfahren nach EP 3 720 673 keine zufriedenstellende Haftung zwischen dem Substrat und einer vergleichsweise harten Beschichtung ergibt, vielmehr kommt es bei der Verwendung eines entsprechenden Verbundes als Prägematrize unter üblichen Pressbedingungen mit Temperaturen um 185° C und einem Druck von über 50 bar zu Ablösungen (Enthaftungen) der Beschichtung von dem Substrat.

In der DE 10 2013 007 429 wird die Verwendung einer an mindestens einer Oberfläche angeätzten Polyethylenterephthalat-Folie (PET-Folie) zur Herstellung einer Oberflächenfolie mit Texturierung oder einer Prägematrize mit Texturierung vorgeschlagen. Die angeätzte PET-Folie soll gegenüber den zur Beschichtung verwendeten Harzen oder Lacken eine hervorragende Benetzung und Haftung aufweisen, so dass im Herstellungsverfahren der texturierten Oberflächenfolie bzw. Prägematrize keine Ablagerung des Harzes oder Lacks auf eine zum Texturieren verwendete Strukturwalze erfolgt. Zum Anätzen der PET-Folie wird in der DE 10 2013 007 429 die Verwendung von Trichloressigsäure in Gegenwart von gefällter Kieselsäure vorgeschlagen. Diese Behandlung von PET-Folien sorgt zwar für Haftungsverbesserungen, jedoch ist eine solche Behandlung unter dem Aspekt des Umweltschutzes bedenklich. Zudem sind solche Folien im Markt nur schwierig verfügbar.

Davon ausgehend liegt der Erfindung die Aufgabe zugrunde, ein Verfahren der eingangs genannten Art anzugeben, mit dem sich ein Strukturgeber zum Texturieren von prägefähigen Materialoberflächen, insbesondere harzhaltigen Laminatoberflächen kostengünstig herstellen lässt, welcher sich durch eine hohe mechanische und thermische Beständigkeit hinsichtlich einer Verwendung in einer Presse auszeichnet. Insbesondere soll ein entsprechender Strukturgeber bereitgestellt werden.

Diese Aufgabe wird durch ein Verfahren mit den in Anspruch 1 angegebenen Merkmalen bzw. durch einen Strukturgeber mit den in Anspruch 14 angegebenen Merkmalen gelöst. Vorteilhafte Ausgestaltungen der erfindungsgemäßen Lösung sind Gegenstand der auf Anspruch 1 bzw. Anspruch 14 rückbezogenen Ansprüche.

Das erfindungsgemäße Verfahren ist dadurch gekennzeichnet, dass vor dem Aufbringen der UV-härtbaren Lackschicht mindestens eine Haftvermittlerschicht aus acryliertem Oligomer, einem Reaktivverdünner und einem auf energiereiche Strahlung, vorzugsweise UV-Strahlung, reagierenden Photoinitiator auf das Trägermaterial aufgebracht wird, und dass die die Prägestruktur aufweisende Lackschicht durch Bestrahlung mit energiereicher Strahlung, vorzugsweise UV-Licht soweit gehärtet wird, dass der Strukturgeber im fertigen Zustand eine mittlere Martenshärte nach DIN EN ISO 14577 im Bereich von 10 bis 80 N/mm², vorzugsweise im Bereich von 30 bis 80 N/mm² aufweist, wobei der zur Messung der Martenshärte als Prüfkörper verwendete Eindringkörper in die Oberfläche der die Prägestruktur aufweisenden Lackschicht gedrückt wird.

Durch die mindestens eine erfindungsgemäße Haftvermittlerschicht (Primerschicht) lässt sich mit einem Verfahren der eingangs genannten Art ein Strukturgeber zum Texturieren von prägefähigen Materialoberflächen, insbesondere harzhaltigen Laminatoberflächen kostengünstig so herstellen, dass der Strukturgeber eine hohe mechanische und thermische Beständigkeit hinsichtlich einer Verwendung in einer Presse aufweist.

Die erfindungsgemäße Haftvermittlerschicht ermöglicht, dass die durch energiereiche Strahlung, vorzugsweise UV-Licht, härtbare Lackschicht nach dem Formen einer dreidimensionalen Prägestruktur in die Lackschicht und einem anschließenden teilweisen bzw. vollständigen Härten der Lackschicht durch energiereiche Strahlung, vorzugsweise UV-Bestrahlung, sehr gut an dem Trägermaterial haftet, so dass es weder beim Entfernen der gehärteten Lackschicht samt Trägermaterial von der zum Formen der Prägestruktur verwendeten Prägevorrichtung noch beim Entfernen des so hergestellten Strukturgebers von einer damit texturierten Material- oder Laminatoberfläche, zu einer mit bloßem Auge sichtbaren oder inakzeptablen Enthaftung oder Ablösung der strukturierten Lackschicht von dem Trägermaterial kommt.

Für die Bestimmung der Haftung von Beschichtungen ist die Gitterschnittprüfung nach DIN EN ISO 2409 (Datum: Juni 2013) üblich. Das Prüfergebnis liefert zwar keine direkten Messwerte, kann aber anhand eines Vergleichs mit Standardbildern, die verschiedene, benotete Schädigungsgrade (Kennwerte) zeigen, beurteilt werden. Als Prüfgerät schreibt die Norm Schneidemesser bestimmter Form und Abmessungen vor. Zur Messung mit einem Mehrschneidengerät wird in die zu beurteilende Beschichtung ein bis auf den Untergrund durchgehendes Schnittband aus mehreren parallelen Einkerbungen gezogen. Anschließend wird im rechten Winkel dazu ein weiteres Schnittband eingeritzt. So entsteht ein Gitter mit einer Vielzahl von Quadraten, dem sogenannten Gitterschnitt. Zur Auswertung wird ein Klebeband mit definierter Haftkraft auf den Gitterschnitt gedrückt und anschließend von der Oberfläche gezogen, um enthaftete Teilstücke zu entfernen. Durch Vergleich mit den Standardbildern werden die Kennwerte Gt0 bis Gt5 vergeben, wobei Gt0 einer geringen Schädigung entspricht, bei der kein Teilstück der Beschichtung abgeplatzt ist, wohingegen Gt5 einer sehr hohen Enthaftung bzw. Schädigung entspricht, bei der die abgeplatzte Fläche der Beschichtung mehr als 65% der Teilstücke beträgt.

Mit dem erfindungsgemäßen Verfahren konnten Strukturgeber mit sehr guter Haftung der strukturierten Lackschicht auf dem Trägermaterial hergestellt werden. Die Gitterschnittprüfung nach DIN EN ISO 2409 (Datum: Juni 2013) ergab bei den erfindungsgemäß hergestellten Strukturgebern einen Gitterschnitt-Kennwert von 0 bis kleiner/gleich 0,5.

Die Haftvermittlerschicht ermöglicht bei dem durch energiereiche Strahlung, vorzugsweise UV-Licht härtbaren Lack ein weites Verarbeitungsspektrum von elastisch bis hart. Des Weiteren ermöglicht der in dem erfindungsgemäßen Verfahren verwendete, durch energiereiche Strahlung, vorzugsweise UV-Licht, härtbare Lack aus acryliertem Oligomer die Einstellung einer hohen Härte der daraus erzeugten Lackschicht bzw. der darin geformten Prägestruktur. Der Strukturgeber weist erfindungsgemäß im fertigen Zustand eine mittlere Martenshärte nach DIN EN ISO 14577 im Bereich von 10 bis 80 N/mm², vorzugsweise im Bereich von 30 bis 80 N/mm² auf. Dies ist für eine hohe mechanische und thermische Beständigkeit des Strukturgebers bei seiner Verwendung in einer beheizten Presse günstig. Die relativ harte Prägestruktur ermöglicht eine lange Nutzungsdauer des Strukturgebers. Zudem ist eine hohe Härte der Lackschicht einschließlich der Prägestruktur zur Erzielung einer hohen Abformgenauigkeit von Vorteil, und zwar insbesondere hinsichtlich der Abformgenauigkeit beim Einpressen einer negativen Struktur in eine prägefähige Materialoberfläche bzw. harzhaltige Laminatoberfläche. Damit lassen sich zum Beispiel entsprechend texturierte Fußbodenpaneele oder Schichtstoffplatten herstellen, die eine relativ hohe Oberflächenrauhigkeit oder Rautiefe Rz nach DIN EN ISO 4287 aufweisen.

Bei der Bestimmung der Eindring- oder Martenshärte nach DIN EN ISO 14577 werden die Prüfkraft F und die Eindringtiefe h während der Belastungs- und Entlastungsphase kontinuierlich gemessen. Die Martenshärte (HM) wird definiert als das Verhältnis der Maximalkraft F zu der dazugehörigen Kontaktfläche des Prüfkörpers und wird in der Einheit N/mm² angegeben. Als Prüfkörper (Eindringkörper) wird entweder eine Pyramide oder ein kugelförmiger Eindringkörper langsam und mit konstanter Geschwindigkeit in die zu prüfende Oberfläche gedrückt. Die Umrechnung der Eindringtiefe zur Kontaktoberfläche muss für jede Eindringkörperform bestimmt werden. Die Kontaktoberfläche wird für die üblicherweise als Eindringkörper verwendete Vickers- oder Berkovich-Pyramide durch das Produkt aus dem Quadrat der Eindringtiefe h und der Konstanten 26,43 errechnet. Die sogenannte Martenshärte (HM) errechnet sich dann nach: HM = F / (26,43 · h²).

Die Martenshärte wird mittels eines Messgeräts der Bezeichnung FischerScope HM2000S der Firma Helmut Fischer bei einer Temperatur von ca. 23° C und einer relativen Luftfeuchte von ca. 50% gemessen. Die Messung erfolgt mit einem Prüfbereich von 300 mN / 20s bis zu einer maximalen Prüfkraft von 300 mN gemäß DIN EN ISO 14577.

Nach einer vorteilhaften Ausgestaltung des erfindungsgemäßen Verfahrens wird die mindestens eine Haftvermittlerschicht mit einer Schichtdicke im Bereich von 0,5 bis 12 µm, vorzugsweise im Bereich von 1 bis 10 µm, besonders bevorzugt im Bereich von 2 bis 5 µm, bezogen auf den Trockenzustand der Haftvermittlerschicht, auf das Trägermaterial aufgebracht. Die Schichtdicke der Haftvermittlerschicht wird bevorzugt möglichst dünn aufgebracht. Der Erfinder hat überraschend gefunden, dass sich hierdurch eine besonders gute Verbindung der Lackschicht mit dem Trägermaterial erzielen lässt. Es wird seitens des Erfinders angenommen, dass die möglichst dünn ausgebildete Haftvermittlerschicht eine Verbindung der Lackschicht mit dem Trägermaterial verbessert bzw. verstärkt, indem die dünne Haftvermittlerschicht zugleich eine chemische Bindung zwischen der Substratoberfläche des Trägermaterials und dem Bindemittel der Lackschicht bewirkt.

Die Haftvermittlerschicht wird vor dem Aufbringen der UV-härtbaren Lackschicht vorzugsweise soweit getrocknet bzw. gehärtet, dass sie zumindest kontakttrocken ist.

Eine weitere vorteilhafte Ausgestaltung des erfindungsgemäßen Verfahrens ist dadurch gekennzeichnet, dass als bahnförmiges Trägermaterial ein für energiereiche Strahlung, insbesondere für UV-Licht zumindest teilweise durchlässiges bahnförmiges Trägermaterial aus Papier und/oder Kunststoff verwendet wird, wobei das Härten der Lackschicht durch Bestrahlung mit energiereicher Strahlung, vorzugsweise UV-Licht während des Formens der Prägestruktur in der Weise durchgeführt wird, dass die Bestrahlung zumindest teilweise von der der Prägestruktur abgewandten Seite des Trägermaterials aus erfolgt.

Das bahnförmige Trägermaterial kann somit mit relativ hoher Fördergeschwindigkeit durch eine Vorrichtung zum Formen der dreidimensionalen Prägestruktur, beispielsweise eine mit einer Prägewalze ausgerüsteten Vorrichtung hindurchbewegt werden, wobei die zunächst fließfähige Lackschicht mittels mindestens eines energiereiche Strahlung, vorzugsweise UV-Licht emittierenden Strahlers an einer günstigen Position innerhalb der Vorrichtung ausreichend schnell während des Formens der Prägestruktur soweit gehärtet werden kann, dass das Trägermaterial zusammen mit der die Prägestruktur aufweisenden Lackschicht sodann von der Prägewalze bzw. einem Prägewerkzeug formstabil abgezogen oder abgetrennt werden kann. Diese Ausgestaltung der Erfindung ist in fertigungstechnischer Hinsicht besonders vorteilhaft.

Das in dem erfindungsgemäßen Verfahren verwendete, für energiereiche Strahlung, insbesondere für UV-Licht, zumindest teilweise durchlässige bahnförmige Trägermaterial kann auch als transparentes bahnförmiges Trägermaterial bezeichnet werden. Unter einem transparenten Trägermaterial wird dabei ein lichtdurchlässiges Trägermaterial verstanden, welches durchsichtig oder durchscheinend sein kann. Durchsichtige Stoffe lassen den überwiegenden Teil des Lichtes hindurch, wobei ein meist geringer Teil des Lichtes absorbiert und gestreut wird. Beispiele für solche durchsichtigen Trägermaterialien sind Folien aus Polyethylenterephthalat (PET), Polycarbonat (PC) oder Polymethylmethacrylat (PMMA). Durchscheinende Stoffe sind dadurch gekennzeichnet, dass zwar Licht durch sie hindurchtritt, aber das Licht im Stoff gestreut wird. Beispiele für durchscheinende Trägermaterialien sind Papiere, insbesondere sogenannte Pergamentpapiere, die je nach Ausführung mehr oder weniger durchscheinend sein können. Das Flächengewicht des transparenten Papiers kann beispielsweise zwischen 80 und 180 g/m² betragen.

Das erfindungsgemäß verwendete bahnförmige Trägermaterial kann beispielsweise eine emittierte UV-Strahlungsdosis im Bereich von 1.500 bis 2.200 mJ/cm² zu 60 bis 80 % hindurchlassen. Die gemessene transmittierende UV-Strahlung liegt dann etwa im Bereich von 900 bis 1.760 mJ/cm², insbesondere im Bereich von 1.300 bis 1.500 mJ/cm².

Eine weitere vorteilhafte Ausgestaltung des erfindungsgemäßen Verfahrens ist dadurch gekennzeichnet, dass als bahnförmiges Trägermaterial eine Materialbahn aus Papier verwendet wird, wobei zur Herstellung der Haftvermittlerschicht ein wässriger Haftvermittler auf das Trägermaterial aufgetragen wird, wobei die Haftvermittlerschicht vor dem Aufbringen der UV-härtbaren Lackschicht auf dieselbe zumindest im Oberflächenbereich getrocknet wird, und wobei die Trocknung unter Anwendung von Temperaturen im Bereich von 80° C bis 160° C, vorzugsweise im Bereich von 90° C bis 140° C, besonders bevorzugt im Bereich von 100° C bis 120° C durchgeführt wird.

Der Wasseranteil des wässrigen Haftvermittlers verbessert die Bindung des Haftvermittlers mit den Fasern der Papierbahn. Der Wasseranteil wird sodann durch die Trocknung entfernt oder weitgehend reduziert. Hierdurch lässt sich eine relativ dünne Haftvermittlerschicht erzielen, die eine besonders gute Bindung zwischen der Substratoberfläche des bahnförmigen Trägermaterials (Papiers) und dem Bindemittel der durch UV-Strahlung härtbaren Lackschicht bewirkt.

Eine vorteilhafte Variante des erfindungsgemäßen Verfahrens sieht vor, dass als bahnförmiges Trägermaterial eine Kunststofffolie verwendet wird, wobei die Haftvermittlerschicht vor dem Aufbringen der UV-härtbaren Lackschicht auf die Haftvermittlerschicht mittels energiereicher Strahlung, vorzugsweise UV-Strahlung, insbesondere UV-C-Stählung, zumindest soweit gehärtet wird, dass die Haftvermittlerschicht an ihrer Oberfläche fest und/oder im Wesentlichen nicht klebend ist, wobei der Photoinitiator der Haftvermittlerschicht geeignet ist, Licht mit einer Wellenlänge im Bereich von 250 bis 350 nm, vorzugsweise im Bereich von 270 bis 330 nm zu absorbieren, und wobei die Haftvermittlerschicht mit einer UV-Strahlungsdosis im Bereich von 60 bis 200 mJ/cm², vorzugsweise 100 bis 160 mJ/cm² gehärtet wird.

Die Verwendung einer Kunststofffolie als bahnförmiges Trägermaterial ist hinsichtlich der Materialkosten und der Robustheit des Trägermaterials und somit des Strukturgebers von Vorteil. Die Vorhärtung bzw. Härtung der Haftvermittlerschicht in dem Maße, dass sie an ihrer Oberfläche fest und/oder im Wesentlichen nicht klebend ist, bevor auf sie die UV-härtbare Lackschicht aufgebracht wird, verbessert die Bindung zwischen der Substratoberfläche des Trägermaterials (Kunststofffolie) und dem Bindemittel der durch UV-Strahlung härtbaren Lackschicht. Diese Ausgestaltung hat insbesondere den Vorteil, dass der Haftvermittler direkt an der Grenzfläche seine optimale Wirkung entfaltet und daher in relativ geringer Menge aufgebracht werden kann, um dennoch hohe bzw. ausgezeichnete Haftwerte zu erreichen. Der entsprechend dieser Ausgestaltung eingesetzte Photoinitiator der Haftvermittlerschicht ermöglicht bei der angegebenen UV-Strahlungsdosis eine rasche sowie energieeffiziente Härtung oder zumindest Vorhärtung der Haftvermittlerschicht, sodass sich der Strukturgeber mit hoher Fertigungsgeschwindigkeit herstellen lässt.

Eine weitere vorteilhafte Ausgestaltung der Erfindung sieht vor, dass die Haftvermittlerschicht 10 bis 90 Gew.-%, vorzugsweise 40 bis 70 Gew.-% acryliertes Oligomer, mindestens 8 Gew.-%, vorzugsweise mindestens 20 Gew.-% Reaktivverdünner, 0,5 bis 10 Gew.-% auf UV-Strahlung reagierenden Photoinitiator und optional 0,1 bis 3 Gew.-% eines oder mehrerer Additive aus einer Gruppe umfassend Entschäumer und Substratnetzmittel enthält, wobei sich die Mengen aller in der Haftvermittlerschicht enthaltenen Bestandteile auf 100 Gew.-% addieren. Das acrylierte Oligomer ist dabei vorzugsweise mindestens di- oder trifunktionell, besonders bevorzugt höherfunktionell. Als acryliertes Oligomer wird dabei beispielsweise Polyurethan-Acrylat verwendet. Der Reaktivverdünner reduziert die Viskosität des Haftvermittlers. Eine geringe Viskosität des Haftvermittlers begünstigt bei kleiner Haftvermittler-Auftragsmenge die Ausbildung einer dünnen, vollflächigen Haftvermittlerschicht auf der Substratoberfläche des bahnförmigen Trägermaterials. Die Viskosität des Haftvermittlers wird hierzu vorzugsweise auf ein Minimum reduziert.

Der in dem Haftvermittler optional enthaltene Entschäumer dient der Bekämpfung (Auflösung) von in der flüssigen Haftvermittlerschicht auftretenden Luft- oder Gaseinschlüssen. Solche Einschlüsse, die in Form von Schaumblasen, z. B. Mikro- und Makroschaumblasen auftreten, können in der Haftvermittlerschicht Poren und Krater verursachen, welche eine optimale Haftung zwischen der Substratoberfläche des bahnförmigen Trägermaterials und dem Bindemittel der nachfolgend aufgebrachten UV-härtbaren Lackschicht verhindern und/oder die Oberflächenqualität des Strukturgebers herabsetzen.

Das in dem Haftvermittler optional enthaltene Substratnetzmittel dient der Abstimmung der Grenzflächenenergie zwischen der Substratoberfläche des bahnförmigen Trägermaterials und dem flüssigen Haftvermittler. Beispielsweise wird mit dem Substratnetzmittel die Grenzflächenenergie bzw. Oberflächenspannung auf dem Substrat gesenkt. Hierdurch lässt sich die Benetzung der Substratoberfläche optimieren, sodass eine gleichmäßige und gute Benetzung aller Bereiche der Substratoberfläche und damit eine gut haftende porenfreie Haftvermittlerschicht erzielt werden.

Als UV-härtbarer Reaktivverdünner können in dem Haftvermittler zum Beispiel 1,6-Hexandioldiacrylat (HDDA), Dipropylene-Glykol Diacrylate (DPGDA), TripropylenGlykol Diacrylate (TPGDA), Ethylenglykoldimethacrylat (EGDMA), Triethylenglycol Divinylether (DVE-3) oder Kombinationen/Mischungen dieser Verdünner verwendet werden. Als auf UV-Strahlung reagierender Photoinitiator wird in der Haftvermittlerschicht beispielsweise Monoacylphosphinoxid (MAPO), Bisacylphosphinoxide (BAPO), 2-Hydroxy-2-methylphenylpropanone (HMPP), 1-Hydroxycyclohexylphenylketon (CPK) und/oder Methylbenzoylformat (MBF) verwendet.

Optional kann die Haftvermittlerschicht Aminopropyltriethoxysilan (AMEO) enthalten, beispielsweise mit einem Anteil im Bereich von 3 bis 8 Gew.-%.

Nach einer weiteren Ausgestaltung des erfindungsgemäßen Verfahrens enthält der für die UV-härtbare Lackschicht verwendete Lack
30 bis 95 Gew.-% acryliertes Oligomer,
10 bis 70 Gew.-% mono- oder multifunktionales Monomer,
1 bis 5 Gew.-% Photoinitiator, und optional
1 bis 6 Gew.-% eines oder mehrerer Additive aus einer Gruppe umfassend Entschäumer, Substratnetzmittel, Release-Additive, Wachse und Antiabsetzmittel, wobei sich die Mengen aller in dem UV-härtbaren Lack enthaltenen Bestandteile auf 100 Gew.-% addieren. Ein entsprechend zusammengesetzter UV-härtbarer Lack ermöglicht die Einstellung einer hohen Härte der daraus erzeugten Lackschicht bzw. der darin ausgebildeten Prägestruktur.

Es wurde seitens des Erfinders überraschender Weise gefunden, dass sich mit einem derart zusammengesetzten UV-härtbaren Lack ein Strukturgeber der eingangs genannten Art kostengünstig herstellen lässt, dessen in die Lackschicht eingeformte Prägestruktur eine hohe Härte sowie Abformgenauigkeit aufweist, sodass sich mittels des erfindungsgemäßen Strukturgebers entsprechend große Strukturtiefen ohne merklichen oder erheblichen Tiefenverlust in eine prägefähige Materialoberfläche, insbesondere harzhaltige Laminatoberfläche einpressen lassen.

Nach einer weiteren Ausgestaltung enthält der für die UV-härtbare Lackschicht verwendete Lack 50 bis 95 Gew.-% acryliertes Oligomer und/oder 10 bis 40 Gew.-% mono- oder multifunktionales Monomer und/oder 1 bis 3 Gew.-% Photoinitiator und/oder 1 bis 5 Gew.-% eines oder mehrerer Additive aus einer Gruppe umfassend Entschäumer, Substratnetzmittel, Release-Additive, Wachse und Antiabsetzmittel enthält, wobei sich die Mengen aller in dem UV-härtbare Lack enthaltenen Bestandteile auf 100 Gew.-% addieren. Durch Verwendung eines solchen Lacks lässt sich ein Strukturgeber der eingangs genannten Art besonders vorteilhaft realisieren. Der relativ hohe Anteil an acryliertem Oligomer ermöglicht in Kombination mit dem mono- oder multifunktionalen Monomer die Einstellung einer hohen Härte der aus dem Lack geformten Prägestruktur. Durch eine Zugabe eines Release-Additivs lassen sich eine abformgenaue Trennung der in der Lackschicht erzeugten Prägestruktur von dem Prägewerkzeug, z. B. einer Prägewalze, sowie eine abformgenaue Trennung des Strukturgebers von einer damit texturierten Materialoberfläche optimieren. Durch eine Zugabe von Wachs als Additiv können eine nicht optimale Härtung an der Oberfläche der Lackschicht verbunden mit einer dauerhaften Klebrigkeit der Lackschicht unterbunden werden. Eine nicht optimale Härtung sowie eine dauerhafte Klebrigkeit können aus der Wechselwirkung von Luftsauerstoff mit der aufgetragenen Lackschicht resultieren. Durch eine Zugabe eines Antiabsetzmittels wird ein Absetzen eines oder mehrerer bestimmter Komponenten des Lacks verhindert, sodass die Zusammensetzung, insbesondere die Härte der erzeugten Lackschicht bzw. Prägestruktur über deren Schichtdicke im Wesentlichen homogen sind. Hinsichtlich der Zugabe eines Entschäumers und/oder Substratnetzmittels zu der Lackzusammensetzung und der daraus resultierenden Wirkungen wird zur Vermeidung von Wiederholungen auf die obigen Ausführungen zu entsprechenden Additiven des Haftvermittlers verwiesen.

Eine weitere Ausgestaltung des erfindungsgemäßen Verfahrens sieht vor, dass der Photoinitiator des UV-härtbaren Lacks so ausgewählt wird, dass dieser Photoinitiator geeignet ist, Licht mit einer Wellenlänge im Bereich von 360 bis 420 nm, vorzugsweise im Bereich von 390 bis 400 nm zu absorbieren. Diese Ausgestaltung der Erfindung ermöglicht eine rasche sowie energieeffiziente Härtung der mit der Prägestruktur versehenen Lackschicht, sodass sich der bahnförmige Strukturgeber mit hoher Fertigungsgeschwindigkeit herstellen lässt. Die Fertigungs- bzw. Bahngeschwindigkeit des Strukturgebers kann in dem erfindungsgemäßen Herstellungsverfahren beispielsweise im Bereich von 5 bis 15 m/min betragen.

Nach einer weiteren Ausgestaltung des erfindungsgemäßen Verfahrens enthalten der Haftvermittler bzw. die Haftvermittlerschicht und/oder der für die UV-härtbare Lackschicht verwendete Lack Urethanacrylat, Polyesteracrylat, Epoxyacrylat oder eine Mischung aus zwei oder drei dieser Acrylate als acryliertes Oligomer. Diese Acrylate, insbesondere Urethanacrylate, zeichnen sich durch hohe Zähigkeit, gute Haftung und hohe Abriebfestigkeit aus. Der erfindungsgemäß hergestellte Strukturgeber erhält dadurch entsprechende Zähigkeit- und Festigkeitseigenschaften, die ihm eine hohe Robustheit für eine Mehrfachverwendung verleihen. Auch trägt diese Ausgestaltung zu einer hohen Abformgenauigkeit bzw. Prägegenauigkeit bei der Texturierung der betreffenden Materialoberfläche, z. B. Laminatoberfläche, bei.

Eine weitere vorteilhafte Ausgestaltung des erfindungsgemäßen Verfahrens ist dadurch gekennzeichnet, dass die UV-härtbare Lackschicht mittels mindestens eines UV-Licht emittierenden LED-Strahlers unter Abgabe einer UV-Strahlungsleistung im Bereich von 8 bis 16 W/cm², vorzugsweise im Bereich von 10 bis 14 W/cm² gehärtet wird. Durch diese Ausgestaltung der Erfindung lassen sich Strukturgeber der hier genannten Art energieeffizient und mit relativ geringem anlagentechnischen Aufwand kostengünstig herstellen.

Eine weitere vorteilhafte Ausgestaltung des erfindungsgemäßen Verfahrens sieht vor, dass die UV-härtbare Lackschicht mittels mindestens eines Quecksilberdampf-Mitteldruckstrahlers oder mindestens eines UV-C-Strahlers endausgehärtet wird, wobei die Endaushärtung vorzugsweise unter Anwendung einer UV-Strahlungsdosis im Bereich von 500 bis 3.000 mJ/cm² durchgeführt wird. Durch diese Ausgestaltung der Erfindung lassen sich Strukturgeber der hier genannten Art mit hoher Fertigungsgeschwindigkeit herstellen. Dabei erfolgt während des Formens der Prägestruktur eine teilweise Härtung (Vorhärtung) der auf die Haftvermittlerschicht aufgebrachten UV-härtbaren Lackschicht. Die Lackschicht wird dabei soweit gehärtet (teilgehärtet), dass der Verbund aus bahnförmigem Trägermaterial, Haftvermittler und Lackschicht von dem Prägewerkzeug, vorzugsweise einer Prägewalze mit hoher Abformgenauigkeit abgezogen werden kann, sodass die in die Lackschicht eingeformte Prägestruktur im Wesentlichen verlustfrei und formstabil von dem Prägewerkzeug entfernt wird. Während dieses ersten Härtungsschritts können beispielsweise ca. 50 bis 80% der für die vollständige Aushärtung erforderlichen Härtung erfolgen. Anschließend erfolgt die Endaushärtung (Nachhärtung) des von dem Prägewerkzeugs entfernten Verbundes mittels mindestens eines Quecksilberdampf-Mitteldruckstrahlers oder mindestens eines UV-C-Strahlers unter Anwendung einer UV-Strahlungsdosis, die vorzugsweise im Bereich von 500 bis 3.000 mJ/cm², beispielsweise im Bereich von 800 bis 2.800 mJ/cm², insbesondere im Bereich von 1.000 bis 2.500 mJ/cm² liegt. Die Härtung (Vorhärtung) der auf die Haftvermittlerschicht aufgebrachten UV-härtbaren Lackschicht erfolgt somit während die Lackschicht in Kontakt mit dem Prägewerkzeug ist, wohingegen die Endaushärtung (Nachhärtung) der Lackschicht erfolgt, wenn die Lackschicht außer Kontakt mit dem Prägewerkzeug ist.

Wird in dem erfindungsgemäßen Verfahren eine Prägewalze oder dergleichen zum Formen der Prägestruktur verwendet, so wird der aus dem bahnförmigem Trägermaterial, der Haftvermittlerschicht und der Lackschicht gebildete Aufbau bzw. Verbund vorzugsweise mit einem Umschlingungswinkel im Bereich von ca. 60° bis 200°, besonders bevorzugt im Bereich von ca. 100° bis 180° um die Prägewalze geführt.

Eine weitere vorteilhafte Ausgestaltung des erfindungsgemäßen Verfahrens ist dadurch gekennzeichnet, dass die Prägestruktur in der UV-härtbaren Lackschicht in der Weise ausgebildet wird, dass sie nach der Aushärtung der Lackschicht eine gemittelte Rautiefe Rz nach DIN EN ISO 4287 im Bereich von 40 bis 200 µm, vorzugsweise im Bereich von 100 bis 200 µm aufweist. Mit einem entsprechend ausgebildeten Strukturgeber lassen sich in prägefähige Materialoberflächen, insbesondere harzhaltige Laminatoberflächen, dreidimensionale Oberflächenstrukturen erzeugen, die der betreffenden Oberfläche ein Aussehen von Naturmaterial, beispielsweise das Aussehen einer Poren aufweisenden Holzmaserung verleihen.

Die gemittelte Rautiefe Rz ist der arithmetische Mittelwert aus Einzelrautiefen von fünf aufeinander folgenden Messtrecken in einem Rauheitsprofil. Die gemittelte Rautiefe Rz wird wie folgt ermittelt: Eine definierte Messstrecke auf der Oberfläche des betreffenden Werkstücks bzw. Strukturgebers wird in sieben Einzelmessstrecken gegliedert, wobei die mittleren Messstrecken gleich groß sind. Die Bestimmung der Rautiefe Rz erfolgt nur über diese fünf Messstrecken, da der anzuwendende Gauß-Filter eine halbe Messstrecke Vor- bzw. Nachlauf benötigt. Von jeder dieser Einzelmessstrecken des Profils wird die Differenz aus maximalem und minimalem Wert ermittelt. Aus den so erhaltenen fünf Einzelrautiefen wird der Mittelwert gebildet.

Die Messung der Rautiefe Rz erfolgt nach DIN EN ISO 4287 und DIN EN ISO 4288. Das zur Messung der Rautiefe Rz verwendete Messgerät muss der DIN EN ISO 3274 genügen. Der oder die eingesetzten Profilfilter müssen der DIN EN ISO 11562 entsprechen.

Des Weiteren ist Gegenstand der vorliegenden Erfindung ein Strukturgeber zum Texturieren einer prägefähigen Materialoberfläche, insbesondere harzhaltigen Laminatoberfläche, insbesondere hergestellt nach einem Verfahren gemäß einer der voranstehend angegebenen Ausgestaltungen, mit einem bahnförmigen Trägermaterial aus Papier und/oder Kunststoff und einer auf dem Trägermaterial aufgebrachten Lackschicht aus acryliertem Oligomer, die eine dreidimensionale Prägestruktur aufweist, dadurch gekennzeichnet, dass die Lackschicht über mindestens eine Haftvermittlerschicht aus acryliertem Oligomer, einem Reaktivverdünner und einem auf UV-Strahlung reagierenden Photoinitiator mit dem Trägermaterial verbunden ist, wobei der Strukturgeber im fertigen Zustand eine mittlere Martenshärte nach DIN EN ISO 14577 im Bereich von 10 bis 80 N/mm², vorzugsweise im Bereich von 30 bis 80 N/mm² aufweist, wobei der zur Messung der Martenshärte als Prüfkörper verwendete Eindringkörper in die Oberfläche der die Prägestruktur aufweisenden Lackschicht gedrückt wurde.

Der erfindungsgemäße Strukturgeber zeichnet sich durch die voranstehend in Bezug auf das erfindungsgemäße Verfahren zur Herstellung des Strukturgebers beschriebenen Vorteile aus.

Eine vorteilhafte Ausgestaltung des erfindungsgemäßen Strukturgebers ist dadurch gekennzeichnet, dass dessen Haftvermittlerschicht 10 bis 90 Gew.-%, vorzugsweise 40 bis 70 Gew.-% acryliertes Oligomer, mindestens 8 Gew.-%, vorzugsweise mindestens 20 Gew.-% Reaktivverdünner, 0,5 bis 10 Gew.-% auf UV-Strahlung reagierenden Photoinitiator und optional 0,1 bis 3 Gew.-% eines oder mehrerer Additive aus einer Gruppe umfassend Entschäumer und Substratnetzmittel enthält, wobei sich die Mengen aller in der Haftvermittlerschicht enthaltenen Bestandteile auf 100 Gew.-% addieren. Der entsprechend ausgebildete Strukturgeber zeichnet sich durch eine hohe mechanische und thermische Beständigkeit für seine Verwendung in einer beheizten Presse, beispielsweise einer CPL-Doppelbandpresse aus.

Gemäß einer weiteren Ausgestaltung des Strukturgebers ist dieser dadurch gekennzeichnet, dass seine die Prägestruktur aufweisende Lackschicht nach der Aushärtung eine gemittelte Rautiefe Rz nach DIN EN ISO 4287 im Bereich von 10 bis 200 µm, vorzugsweise im Bereich von 40 bis 200 µm, besonders bevorzugt im Bereich von 100 bis 200 µm aufweist.

Der erfindungsgemäße Strukturgeber lässt sich, wenn dessen bahnförmiges Trägermaterial eine für energiereiche Strahlung, insbesondere für UV-Strahlung zumindest teilweise durchlässige Kunststofffolienbahn ist, auch vorteilhaft im sogenannten CCI-Verfahren zur Texturierung von prägefähigen Lackoberflächen verwenden. CCI steht für Calander Coating Inert. Mit dem CCI-Verfahren können lackierbare Werkstoffplatten, beispielsweise MDF-, HDF- oder Kunststoffplatten, mit einer hochglänzenden oder matten Lackoberfläche versehen werden. Bei diesem Verfahren wird die Werkstoff-Oberfläche, vorzugsweise Holzwerkstoff-Oberfläche, nach dem Auftrag von UV-Lack in einem Kalander durch eine transparente Folie hindurch mittels UV-Licht getrocknet bzw. gehärtet. Bei dem CCI-Verfahren wird die Werkstoff-Oberfläche vorzugsweise zunächst grundiert und anschließend UV-Lack als Endlack aufgetragen. Die mit flüssigem UV-Lack beschichtete Werkstoffplatte wird direkt in den Kalander gefördert. Dort härtet die Oberfläche unter inerten Bedingungen aus. Anders ausgedrückt, findet eine "gekapselte Trocknung" der lackierten Werkstoffplatte unter einer Folie statt. Als diese Folie kann vorteilhaft der erfindungsgemäße Strukturgeber mit einer für UV-Strahlung zumindest teilweise durchlässigen Kunststofffolienbahn als Trägermaterial verwendet werden. Auf diese Weise lassen sich Werkstoffplatten mit texturierter Lackoberfläche herstellen, die höchsten Qualitätsanforderungen genügen.

Nachfolgend wird die Erfindung anhand einer Ausführungsbeispiele darstellenden Zeichnung näher erläutert. Es zeigen schematisch:
- Fig. 1: ein Verfahren bzw. eine Vorrichtung zur Herstellung eines Strukturgebers zum Texturieren einer prägefähigen Materialoberfläche, insbesondere harzhaltigen Laminatoberfläche, in einer Seitenansicht; und
- Fig. 2: ein weiteres Ausführungsbeispiel eines Verfahrens bzw. einer Vorrichtung zur Herstellung eines Strukturgebers zum Texturieren einer prägefähigen Materialoberfläche, insbesondere harzhaltigen Laminatoberfläche, in einer Seitenansicht.

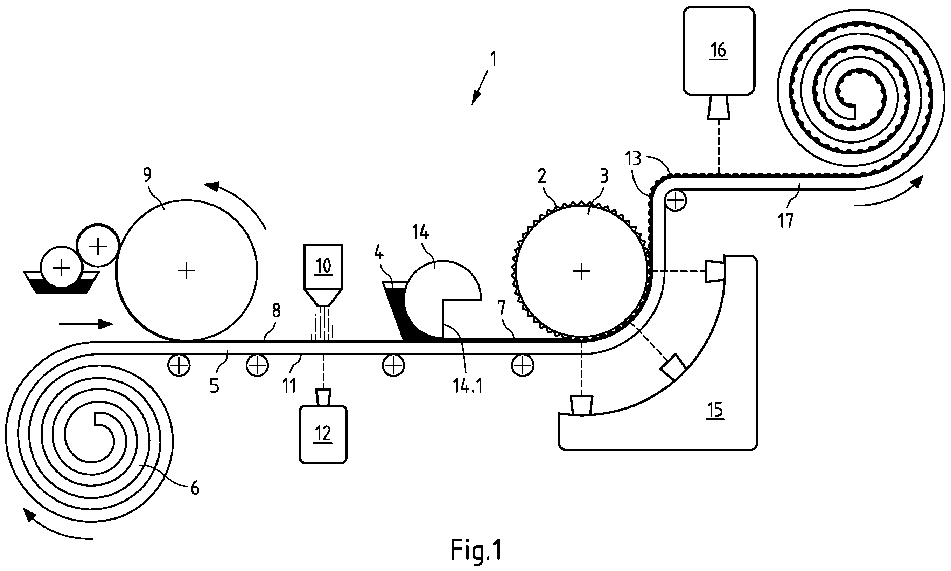

In Fig. 1 ist schematisch eine Vorrichtung 1 dargestellt, die zur Durchführung des erfindungsgemäßen Verfahrens eingesetzt werden kann und an der das erfindungsgemäße Verfahren beispielhaft veranschaulicht ist. Mittels dieser Vorrichtung können dreidimensionale Strukturen 2, insbesondere Nachbildungen von Holzmaserungs-, Naturstein-, Mosaik- und/oder Fliesenmusterstrukturen, von einer entsprechenden Masterstruktur, die beispielsweise in Form einer Prägewalze 3 ausgeführt ist, auf ein mit UV-härtbarem Lack 4 beschichtetes Trägermaterial 5 übertragen werden.

Bei dem Trägermaterial 5 handelt es sich um ein bahnförmiges Trägermaterial aus Papier und/oder Kunststoff, das für energiereiche Strahlung, insbesondere für UV-Licht zumindest teilweise durchlässig ist. Das Trägermaterial 5 wird als Rolle 6 in aufgewickelter Form bereitgestellt. Beispielsweise wird als Trägermaterial 5 eine für UV-Strahlung durchlässige Folie verwendet, die aus Polyethylenterephthalat (PET), Polyethylen (PE), Polypropylen (PP), Polycarbonat (PC), Polymethylmethacrylat (PMMA), Polyvinylchlorid (PVC) oder einem anderen für UV-Strahlung durchlässigen Kunststoff hergestellt ist. Die Folie kann auch als transparente Folie bezeichnet werden. Die Dicke der Folie liegt beispielsweise im Bereich von 50 bis 200 µm, vorzugsweise im Bereich von 75 bis 125 µm, besonders bevorzugt im Bereich von 100 bis 125 µm. Alternativ wird als bahnförmiges Trägermaterial 5 transparentes, für UV-Strahlung durchlässiges Papier verwendet. Das Flächengewicht des Papiers liegt beispielsweise im Bereich von 80 bis 180 g/m², vorzugsweise im Bereich von 150 bis 170 g/m².

Auf das Trägermaterial 5 wird eine UV-härtbare Lackschicht 7 aus acryliertem Oligomer aufgebracht, in die nachfolgend eine dreidimensionale Prägestrukur eingeformt wird. Erfindungsgemäß wird auf das Trägermaterial 5 vor dem Aufbringen der UV-härtbaren Lackschicht 7 mindestens eine Haftvermittlerschicht 8 aufgebracht, die aus acryliertem Oligomer, einem Reaktivverdünner und einem auf UV-Strahlung reagierenden Photoinitiator zusammengesetzt ist.

Die Haftvermittlerschicht 8 enthält beispielsweise 10 bis 90 Gew.-%, vorzugsweise 40 bis 70 Gew.-% acryliertes Oligomer, mindestens 8 Gew.-%, vorzugsweise mindestens 20 Gew.-% Reaktivverdünner und 0,5 bis 10 Gew.-%, vorzugsweise 0,5 bis 5 Gew.-% auf UV-Strahlung reagierenden Photoinitiator.

Der für die Haftvermittlerschicht 8 verwendete Haftvermittler bzw. die damit gebildete Haftvermittlerschicht kann nach einer bevorzugten Ausgestaltung folgende Zusammensetzung aufweisen:
60 bis 90 Gew.-% Ebercryl 4265 der Firma Allnex (als acryliertes Oligomer oder vergleichbares Polyurethanacrylat),
10 bis 30 Gew.-% Triethylenglycol Divinylether (z. B. Ashland Rapidure DVE-3 oder vergleichbares Monomer),
5 bis 10 Gew.-% Methylbenzoylformat (MBF oder vergleichbarer auf UV-Strahlung reagierender Photoinitiator) und
0,1 bis 3 Gew.-% eines oder mehrerer Additive aus einer Gruppe umfassend Entschäumer und Substratnetzmittel, wobei sich die Mengen aller in der Haftvermittlerschicht enthaltenen Bestandteile auf 100 Gew.-% addieren.

Der Photoinitiator ist beispielsweise geeignet, Licht mit einer Wellenlänge im Bereich von 250 bis 350 nm, vorzugsweise im Bereich von 270 bis 330 nm zu absorbieren. Der Haftvermittler wird beispielsweise mittels einer gravierten oder gummierten Auftragswalze 9 auf das bahnförmige Trägermaterial 5 aufgebracht.

Wird als Trägermaterial 5 transparentes, für UV-Strahlung durchlässiges Papier verwendet, so wird der Haftvermittler zur Ausbildung der Haftvermittlerschicht 8 vorzugsweise in wässriger Form auf die Papierbahn aufgebracht und die Haftvermittlerschicht 8 vor dem Aufbringen der UV-härtbaren Lackschicht 7 thermisch getrocknet. Die Trocknung kann beispielsweise mittels einer der Haftvermittlerschicht 8 zugewandten Heizstrahler-Vorrichtung 10 durchgeführt werden. Alternativ oder zusätzlich kann auch auf der der Haftvermittlerschicht 8 abgewandten Seite (Unter- oder Rückseite) 11 der Papierbahn 5 eine thermische Trocknungsvorrichtung, beispielsweise eine Heizstrahler-Vorrichtung (nicht gezeigt) angeordnet sein.

Die Auftragsmenge des wässrigen Haftvermittlers wird so eingestellt, dass die Haftvermittlerschicht 8 im Trockenzustand eine Schichtdicke im Bereich von 0,5 bis 12 µm, vorzugsweise im Bereich von 1 bis 10 µm, besonders bevorzugt im Bereich von 2 bis 5 µm aufweist. Die Trocknung der Haftvermittlerschicht 8 erfolgt beispielsweise unter Anwendung von Temperaturen im Bereich von 80°C bis 160°C, vorzugsweise im Bereich von 90°C bis 140°C, besonders bevorzugt im Bereich von 100°C bis 120°C.

Wird anstelle einer Papierbahn eine für UV-Strahlung durchlässige Kunststofffolienbahn verwendet, so wird der Haftvermittler zur Ausbildung der Haftvermittlerschicht 8 vorzugsweise in nicht-wässriger Form auf die Kunststofffolienbahn aufgebracht und die Haftvermittlerschicht 8 vor dem Aufbringen der UV-härtbaren Lackschicht 7 mittels UV-Strahlung soweit gehärtet, dass die Haftvermittlerschicht 8 an ihrer Oberfläche fest und/oder im Wesentlichen nicht klebend ist.

Diese zumindest teilweise Härtung der Haftvermittlerschicht 8 kann beispielsweise mittels eines oder mehrerer UV-Strahler 12, vorzugsweise eines oder mehrerer UV-Licht emittierender LED-Strahler durchgeführt werden, die der Haftvermittlerschicht zugewandt sind und/oder auf der abgewandten Seite (Unter- oder Rückseite) 11 der bahnförmigen Kunststofffolie angeordnet sind. Die Haftvermittlerschicht 8 wird beispielsweise mit einer UV-Strahlungsdosis im Bereich von 60 bis 200 mJ/cm², vorzugsweise 100 bis 160 mJ/cm² gehärtet.

Des Weiteren liegt es auch im Rahmen der Erfindung, die zumindest teilweise Härtung der Haftvermittlerschicht 8 durchzuführen, indem eine thermische Trocknung und eine Strahlenhärtung - wie zuvor beschrieben - miteinander kombiniert werden.

Die Auftragsmenge des nicht-wässrigen Haftvermittlers wird so eingestellt, dass die daraus gebildete Haftvermittlerschicht 8 im Trockenzustand eine Schichtdicke im Bereich von 0,5 bis 12 µm, vorzugsweise im Bereich von 1 bis 10 µm, besonders bevorzugt im Bereich von 2 bis 5 µm aufweist.

Nach der zumindest teilweisen Trocknung bzw. zumindest teilweisen Härtung der Haftvermittlerschicht 8 wird auf diese der UV-härtbare Lack aus acryliertem Oligomer für die nachfolgende Formung einer dreidimensionalen Prägestruktur 13 aufgebracht.

Für die UV-härtbare Lackschicht 7 wird vorzugsweise ein Lack als Strukturlack verwendet, der
30 bis 95 Gew.-% acryliertes Oligomer,
10 bis 70 Gew.-% mono- oder multifunktionales Monomer,
1 bis 5 Gew.-% Photoinitiator, und optional
1 bis 6 Gew.-% eines oder mehrerer Additive aus einer Gruppe umfassend Entschäumer, Substratnetzmittel, Release-Additive, Wachse und Antiabsetzmittel enthält, wobei sich die Mengen aller in dem UV-härtbaren Lack enthaltenen Bestandteile auf 100 Gew.-% addieren. Der Photoinitiator des UV-härtbaren Lacks ist geeignet, Licht mit einer Wellenlänge im Bereich von 360 bis 420 nm, vorzugsweise im Bereich von 390 bis 400 nm zu absorbieren.

Der Auftrag des UV-härtbaren Lacks kann mittels einer Walzenauftrags- oder Rakelauftragsvorrichtung, vorzugsweise einer Commabar-Auftragsvorrichtung 14 erfolgen. Die Commabar-Auftragsvorrichtung 14 weist ein spezielles Rakelmesser auf, welches aus einer Walze gebildet ist, in die eine Aussparung 14.1 von ca. 90° eingearbeitet wurde. Diese Aussparung 14.1 lässt das profilstangenförmige Messer in der Seitenansicht (Querschnittansicht) wie ein Komma aussehen. Die Einstellung des Commabars bzw. der durch den Commabar und den zugehörigen Lackkasten begrenzten Austrittsöffnung kann durch Änderung in horizontaler und vertikaler Position als auch durch Änderung der Drehwinkeleinstellung erfolgen. Aufgrund der Rundung in der Messergeometrie sind die auf den UV-härtbaren Lack wirkenden Scherkräfte geringer als bei herkömmlichen Rakelmessern. Das Commabarsystem ist vorteilhaft beim Auftrag von dilatanten, viskoelastischen UV-Lacken. Die mögliche Variation von Auftragsgewicht und Viskosität ist beim Commabarsystem besonders groß.

Die UV-härtbare Lackschicht wird im fließfähigen Zustand und daher mit relativ geringem Druck mit der Prägewalze 3 oder einer anderen Masterstruktur in Kontakt gebracht, sodass der UV-härtbare Lack in die Vertiefungen der Mantelfläche der Prägewalze 3 gelangt. Der aus dem Trägermaterial 5, der Haftvermittlerschicht 8 und der Lackschicht 7 gebildete Verbund wird dabei mit einem deutlich ausgebildeten Umschlingungswinkel um die Prägewalze (Masterstruktur) 3 geführt (vgl. Fig. 1). Der Umschlingungswinkel kann beispielsweise im Bereich von 60° bis 200°, vorzugsweise im Bereich von 100° bis 180° liegen.

Die Lackschicht 7 wird während sie in Kontakt mit der Prägewalze (Masterstruktur) 3 ist, d.h. während des Formens der Prägestruktur 13, durch Bestrahlung mit energiereicher Strahlung, vorzugsweise UV-Licht, gehärtet, wobei die Bestrahlung vorzugsweise von der der Prägestruktur 13 abgewandten Seite des strahlungsdurchlässigen, bahnförmigen Trägermaterials 5 aus erfolgt. Die hierzu verwendete Bestrahlungsvorrichtung ist in Fig. 1 mit 15 bezeichnet. Ergänzend zu der Bestrahlung im Bereich der Prägewalze 3 von unten kann die Bestrahlung der Lackschicht im Bereich der Prägewalze 3 auch von mindestens einer der Seiten der Prägewalze 3 aus erfolgen.

Als Bestrahlungsvorrichtung 15 wird vorzugsweise mindestens ein UV-Licht emittierender LED-Strahler verwendet. Die Bestrahlungsvorrichtung 15 härtet die Lackschicht 7 unter Abgabe einer UV-Strahlungsleistung im Bereich von 8 bis 16 W/cm², vorzugsweise im Bereich von 10 bis 14 W/cm², beispielsweise von ca. 12 W/cm².

Die Lackschicht 7 wird in Kontakt mit der Prägewalze (Masterstruktur) 3 soweit gehärtet (teilgehärtet), dass der Verbund aus bahnförmigem Trägermaterial 5, Haftvermittlerschicht 8 und Lackschicht 7 mit hoher Abformgenauigkeit von der Prägewalze 3 abgezogen werden kann. Insbesondere kann die in die Lackschicht eingeformte Prägestruktur 13 nach dieser Härtung im Wesentlichen ohne Tiefenverlust und formstabil von der Prägewalze 3 entfernt werden. Anschließend wird eine Nachhärtung (Endaushärtung) der Lackschicht 7 sowie der darunter liegenden Haftvermittlerschicht 8 mittels mindestens eines Quecksilberdampf-Mitteldruckstrahlers 16 oder mindestens eines UV-C-Strahlers durchgeführt, wobei diese Nachhärtung bzw. Endaushärtung vorzugsweise unter Anwendung einer UV-Strahlungsdosis im Bereich von 500 bis 3.000 mJ/cm² durchgeführt wird. Die Nachhärtung bzw. Endaushärtung des Strukturgebers 17 erfolgt beispielsweise mit einer flächenspezifischen Leistung von ca. 200 W/cm².

Die Prägestruktur 13 des so hergestellten Strukturgebers 17 weist nach dieser abschließenden Nachhärtung (Endaushärtung) eine gemittelte Rautiefe Rz nach DIN EN ISO 4287 im Bereich von 10 bis 200 µm, vorzugsweise im Bereich von 40 bis 200 µm, besonders bevorzugt im Bereich von 100 bis 200 µm auf.

Am Ende der Vorrichtung 1 zur Durchführung des erfindungsgemäßen Herstellungsverfahrens wird der fertige Strukturgeber 17 aufgewickelt.

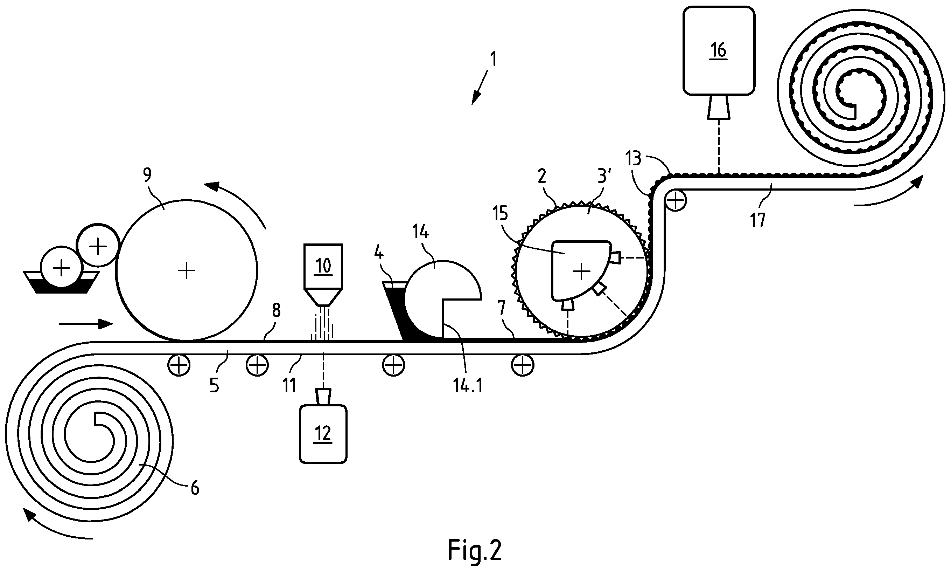

Das in Fig. 2 skizzierte Ausführungsbeispiel unterscheidet sich von dem in Fig. 1 offenbarten Beispiel dadurch, dass die Prägewalze 3' als Hohlwalze einen strahlungsdurchlässigen bzw. transparenten Walzenmantel aufweist, wobei innerhalb der Prägewalze 3' mindestens eine Bestrahlungsvorrichtung 15 angeordnet und auf den Kontaktbereich gerichtet ist, in welchem die UV-härtbare Lackschicht 7 die Prägewalze 3' kontaktiert.

Nachfolgend sind weitere Beispiele für Zusammensetzungen des in dem erfindungsgemäßen Verfahren bzw. entsprechenden Versuchen verwendeten Haftvermittlers sowie des strahlenhärtbaren Lacks (Decklacks) zur Formung der Prägestruktur 13 des Strukturgebers 17 und Vergleichsbeispiele angegeben. Insbesondere sind dazu auch in Laborversuchen gemessene Mittelwerte für die Martenshärte und Messwerte für die Rautiefe Rz für bestimmte bahnförmige Trägermaterialien angegeben. Des Weiteren sind Messergebnisse der Gitterschnittprüfung angegeben.

In Versuchen zu dem erfindungsgemäßen Verfahren verwendete Haftvermittler:

| Interne Bezeichnung | Zusammensetzung |
|---|---|
| V1 | 50 Gew.-% PU-Acrylat (difunktionell), 30 Gew.-% HDDA, 15 Gew.-% EGDMA und 5 Gew.-% MBF; |
| V2 | 37,5 Gew.-% PU-Acrylat (6-funktionell), 50 Gew.-% DPGDA, 10 Gew.-% HDDA und 2,5 Gew.-% MBF; |
| V2B | 20 Gew.-% PU-Acrylat (6-funktionell), 72,5 Gew.-% HDDA, 5 Gew.-% AMEO und 2,5 Gew.-% MBF. |

In Versuchen zu dem erfindungsgemäßen Verfahren verwendete strahlenhärtbare Decklacke:

| Interne Bezeichnung | Zusammensetzung |
|---|---|
| Decklack A | 76 Gew.% Urethanacrylat, aliphatisch, 2 bis 3-funktionell, 18 Gew.-% Monomere, mono- oder difunktionell, 4 Gew.-% Additive (Entschäumer, Substratnetzmittel, Release-Additiv, Wachs, Antiabsetzmittel), 2 Gew.-% Photoinitiator (z. B. MAPO, BAPO, HMPP, CPK, MBF); |
| Decklack B | 48 Gew.% Urethanacrylat, aromatisch, 3 bis 5-funktionell, 46 Gew.-% Monomere, difunktionell, 4 Gew.-% Additive (Entschäumer, Substratnetzmittel, Release-Additiv, Wachs, Antiabsetzmittel), 2 Gew.-% Photoinitiator (z. B. MAPO, BAPO, HMPP, CPK, MBF); |
| Decklack C | 94 Gew.% Urethanacrylat, aliphatisch, 5 bis 6-funktionell, 4 Gew.-% Additive (Entschäumer, Substratnetzmittel, Release-Additiv, Wachs, Antiabsetzmittel), 2 Gew.-% Photoinitiator (z. B. MAPO, BAPO, HMPP, CPK, MBF). |

Martenshärte erfindungsgemäß hergestellter Strukturgeber und Vergleichsmaterialien:

| Beispiel Nr. | Träger-material | Dicke des Trägermaterials | Haftvermittler/ Decklack | Martenshärte Mittelwert |
|---|---|---|---|---|
| 1 | PET Folie Hostaphan | 75 µm | ohne (unlackiert) | 39,8 |
| 2 | PET Folie Hostaphan | 75 µm | V1 / A | 43,5 |
| 3 | PET Folie Hostaphan | 75 µm | V1 / B | 12,5 |
| 4 | PET Folie Hostaphan | 75 µm | V1 / C | 74,2 |
| 5 | PET Folie Hostaphan | 75 µm | V2B / A | 29 |
| 6 | PET Folie Hostaphan | 75 µm | V2B / B | 10,7 |
| 7 | PET Folie Hostaphan | 75 µm | V2B / C | 44,6 |
| 8 | Papier | 180 µm | ohne (unlackiert) | 25,8 |
| 9 | Papier | 180 µm | wässrig. Primer / A | 44,7 |
| 10 | ohne (Decklack vonFolie ohne Primerabgezogen) | --- | Decklack C | 44,3 |

Die Martenshärte wurde bei den vorgenannten Beispielen 1 bis 10 mit einem Messgerät FISCHERSCOPE HM2000S der Firma Helmut Fischer gemäß DIN EN ISO 14577 gemessen, wobei der angewendete Prüfbereich 300 mN / 20 s betrug. Um zu veranschaulichen, welchen Einfluss das Trägermaterial 5 auf die gemessene Oberflächenhärte des Strukturgebers 17 hat, wurde die Martenshärte des Trägermaterials (PET Folie Hostaphan^{®} der Firma Mitsubishi bzw. Papier) auch für sich genommen, d.h. ohne Haftvermittler und ohne Decklack, gemessen (vgl. Beispiele 1 und 8). Zudem wurde zum Vergleich die Martenshärte eines strahlenhärtbaren Lacks für sich genommen gemessen, indem der Lack (nämlich Decklack C) von einer Folie, auf welcher der Lack zuvor ohne Primer (Haftvermittler) aufgebracht wurde, abgezogen und dann separat gemessen wurde (vgl. Beispiel 10).

Gitterschnittprüfungen zur Bestimmung der Haftung der Lackbeschichtung der Strukturgeber 17 gemäß den voranstehend angegebenen Beispielen 2, 3, 4 und 6 ergaben jeweils einen Kennwert Gt von 0. Das heißt, bei diesen Beispielen konnten keine Abplatzungen und somit keine nennenswerte Schädigung (Enthaftung) der jeweiligen Lackbeschichtung des Strukturgebers 17 festgestellt werden. Bei den Beispielen 5 und 7 ergaben die Gitterschnittprüfungen Kennwerte Gt von 2 bzw. 1. Allerdings sind auch diese Gt-Werte gute Kennwerte, da üblicherweise ein mittlerer Kennwert Gt von mindestens 3,5 noch als ausreichender Haftungswert eingestuft wird.

Vergleichsversuche, bei denen die UV-härtbare Lackschicht aus dem oben angegebenen Decklack A, B bzw. C direkt auf eine Kunststofffolie (75 µm PET-Folie Hostaphan^{®} der Firma Mitsubishi) aufgebracht wurde, d.h. ohne Verwendung eines der oben angegebenen Haftvermittler V1, V2 oder V2B, haben bei der Gitterschnittprüfung jeweils eine sehr hohe Enthaftung (Gt-Wert 5) ergeben.

Zur Beurteilung der Abformgenauigkeit der Prägestruktur 13 erfindungsgemäß hergestellter Strukturgeber 17 wurde deren mittlere Rautiefe Rz nach DIN EN ISO 4287 gemessen und mit der mittleren Rautiefe Rz der jeweiligen verwendeten Prägewalze 3 verglichen. Eine dieser Prägewalzen weist eine nachgebildete Holzstruktur als Masterstruktur auf, während eine andere Prägewalze eine Vielzahl negativer Pyramiden als Masterstruktur aufweist.

| Masterstruktur bzw. Strukturgeber | Lackmenge | Gemessene mittlere Rautiefe Rz |
|---|---|---|
| Prägewalze mit Holzstruktur als Masterstruktur | | 43,782 µm |
| Lackierte PET Folie Hostphan | 100 g/m² | 40,36 µm |
| Lackiertes Pergamentpapier | 100 g/m² | 40,176 µm |
| Prägewalze mit negativen Pyramiden als Masterstruktur | | 150 µm |
| Lackierte PET Folie Hostphan | 90 g/m² | 161,443 µm |
| Lackiertes Pergamentpapier | 90 g/m² | 162,237 µm |

Anhand der voranstehend genannten Messwerte der mittleren Rautiefe Rz lässt sich erkennen, dass die Abformgenauigkeit der Prägestruktur bei erfindungsgemäß hergestellten Strukturgebern hervorragend ist. Es konnte zudem mittels Mikroskopaufnahmen festgestellt werden, dass durch das erfindungsgemäße Verfahren eine originalgetreue Abformung der Masterstruktur der Prägewalze 3 in die Prägestruktur 13 des strahlengehärteten Decklacks des Strukturgebers 17 erhalten wird.

Die Ausführung der Erfindung ist nicht auf die in der schematischen Zeichnung dargestellten Ausführungsbeispiele beschränkt. Vielmehr sind zahlreiche Varianten denkbar, die auch bei von den Beispielen abweichender Gestaltung von der in den Ansprüchen offenbarten Erfindung Gebrauch machen. Beispielsweise kann die thermische Trocknung oder die Härtung der Haftvermittlerschicht 8 vor dem Aufbringen der UV-härtbaren Lackschicht 7 nur von einer Seite, beispielsweise von Oberseite der Haftvermittlerschicht 8 aus durchgeführt werden. Des Weiteren können der Prägewalze 3 mehrere Bestrahlungsvorrichtungen, vorzugsweise UV-Licht emittierende LED-Strahler zugeordnet sein, die zur Härtung der Lackschicht 7 sowohl außerhalb als auch innerhalb der einen transparent ausgebildeten Walzenmantel aufweisenden Prägewalze 3 angeordnet sind.

## Patentansprüche

1. Verfahren zur Herstellung eines Strukturgebers (17) zum Texturieren einer prägefähigen Materialoberfläche, insbesondere harzhaltigen Laminatoberfläche, umfassend die Schritte:
Bereitstellen eines bahnförmigen Trägermaterials (5) aus Papier und/oder Kunststoff,
Aufbringen einer UV-härtbaren Lackschicht (7) aus acryliertem Oligomer auf das Trägermaterial,
Formen einer dreidimensionalen Prägestruktur (13) in die auf das Trägermaterial (5) aufgebrachte Lackschicht (7) und
Härten der Lackschicht (7) durch Bestrahlung mit energiereicher Strahlung, vorzugsweise UV-Licht, während des Formens der Prägestruktur (13),
**dadurch gekennzeichnet, dass** vor dem Aufbringen der UV-härtbaren Lackschicht (7) mindestens eine Haftvermittlerschicht (8) aus acryliertem Oligomer, einem Reaktivverdünner und einem auf energiereiche Strahlung, vorzugsweise UV-Strahlung reagierenden Photoinitiator auf das Trägermaterial aufgebracht wird, und dass die die Prägestruktur (13) aufweisende Lackschicht (7) durch Bestrahlung mit energiereicher Strahlung, vorzugsweise UV-Licht soweit gehärtet wird, dass der Strukturgeber (17) im fertigen Zustand eine mittlere Martenshärte nach DIN EN ISO 14577 im Bereich von 10 bis 80 N/mm², vorzugsweise im Bereich von 30 bis 80 N/mm² aufweist, wobei der zur Messung der Martenshärte als Prüfkörper verwendete Eindringkörper in die Oberfläche der die Prägestruktur (13) aufweisenden Lackschicht (7) gedrückt wird.

2. Verfahren nach Anspruch 1, **dadurch gekennzeichnet, dass** die mindestens eine Haftvermittlerschicht (8) mit einer Schichtdicke im Bereich von 0,5 bis 12 µm, vorzugsweise im Bereich von 1 bis 10 µm, besonders bevorzugt im Bereich von 2 bis 5 µm, bezogen auf den Trockenzustand der Haftvermittlerschicht (8), auf das Trägermaterial (5) aufgebracht wird.

3. Verfahren nach Anspruch 1 oder 2, **dadurch gekennzeichnet, dass** als bahnförmiges Trägermaterial (5) ein für energiereiche Strahlung, insbesondere für UV-Licht zumindest teilweise durchlässiges bahnförmiges Trägermaterial (5) aus Papier und/oder Kunststoff verwendet wird, wobei das Härten der Lackschicht (7) durch Bestrahlung mit energiereicher Strahlung, vorzugsweise UV-Licht während des Formens der Prägestruktur (13) in der Weise durchgeführt wird, dass die Bestrahlung zumindest teilweise von der der Prägestruktur (13) abgewandten Seite des Trägermaterials (5) aus erfolgt.

4. Verfahren nach einem der Ansprüche 1 bis 3, **dadurch gekennzeichnet, dass** als bahnförmiges Trägermaterial (5) eine Materialbahn aus Papier verwendet wird, wobei zur Herstellung der Haftvermittlerschicht (8) ein wässriger Haftvermittler auf das Trägermaterial (5) aufgetragen wird, wobei die Haftvermittlerschicht (8) vor dem Aufbringen der UV-härtbaren Lackschicht (7) auf dieselbe zumindest im Oberflächenbereich getrocknet wird, und wobei die Trocknung unter Anwendung von Temperaturen im Bereich von 80° C bis 160° C, vorzugsweise im Bereich von 90° C bis 140° C, besonders bevorzugt im Bereich von 100° C bis 120° C durchgeführt wird.

5. Verfahren nach einem der Ansprüche 1 bis 3, **dadurch gekennzeichnet, dass** als bahnförmiges Trägermaterial (5) eine Kunststofffolie verwendet wird, wobei die Haftvermittlerschicht (8) vor dem Aufbringen der UV-härtbaren Lackschicht (7) auf die Haftvermittlerschicht (8) mittels energiereicher Strahlung, vorzugsweise UV-Strahlung zumindest soweit gehärtet wird, dass die Haftvermittlerschicht an ihrer Oberfläche fest und/oder im Wesentlichen nicht klebend ist, wobei der Photoinitiator der Haftvermittlerschicht (8) geeignet ist, Licht mit einer Wellenlänge im Bereich von 250 bis 350 nm, vorzugsweise im Bereich von 270 bis 330 nm zu absorbieren, und wobei die Haftvermittlerschicht (8) mit einer UV-Strahlungsdosis im Bereich von 60 bis 200 mJ/cm², vorzugsweise 100 bis 160 mJ/cm² gehärtet wird.

6. Verfahren nach einem der Ansprüche 1 bis 5, **dadurch gekennzeichnet, dass** die Haftvermittlerschicht (8)
10 bis 90 Gew.-%, vorzugsweise 40 bis 70 Gew.-% acryliertes Oligomer, mindestens 8 Gew.-%, vorzugsweise mindestens 20 Gew.-% Reaktivverdünner,
0,5 bis 10 Gew.-% auf UV-Strahlung reagierenden Photoinitiator und
optional 0,1 bis 3 Gew.-% eines oder mehrerer Additive aus einer Gruppe umfassend Entschäumer und Substratnetzmittel enthält, wobei sich die Mengen aller in der Haftvermittlerschicht enthaltenen Bestandteile auf 100 Gew.-% addieren.

7. Verfahren nach einem der Ansprüche 1 bis 6, **dadurch gekennzeichnet, dass** für die UV-härtbare Lackschicht (7) ein Lack verwendet wird, der
30 bis 95 Gew.-% acryliertes Oligomer,
10 bis 70 Gew.-% mono- oder multifunktionales Monomer,
1 bis 5 Gew.-% Photoinitiator, und optional
1 bis 6 Gew.-% eines oder mehrerer Additive aus einer Gruppe umfassend Entschäumer, Substratnetzmittel, Release-Additive, Wachse und Antiabsetzmittel enthält, wobei sich die Mengen aller in dem UV-härtbaren Lack enthaltenen Bestandteile auf 100 Gew.-% addieren.

8. Verfahren nach einem der Ansprüche 1 bis 7, **dadurch gekennzeichnet, dass** die Haftvermittlerschicht (8) und/oder der für die UV-härtbare Lackschicht (7) verwendete Lack Urethanacrylat, Polyesteracrylat, Epoxyacrylat oder eine Mischung aus zwei oder drei dieser Acrylate als acryliertes Oligomer enthält.

9. Verfahren nach einem der Ansprüche 1 bis 8, **dadurch gekennzeichnet, dass** die UV-härtbare Lackschicht (7) mittels mindestens eines UV-Licht emittierenden LED-Strahlers unter Abgabe einer UV-Strahlungsleistung im Bereich von 8 bis 16 W/cm², vorzugsweise im Bereich von 10 bis 14 W/cm² gehärtet wird.

10. Verfahren nach einem der Ansprüche 1 bis 9, **dadurch gekennzeichnet, dass** die UV-härtbare Lackschicht mittels mindestens eines Quecksilberdampf-Mitteldruckstrahlers (16) oder mindestens eines UV-C-Strahlers endausgehärtet wird, wobei die Endaushärtung vorzugsweise unter Anwendung einer UV-Strahlungsdosis im Bereich von 500 bis 3.000 mJ/cm² durchgeführt wird.

11. Verfahren nach einem der Ansprüche 1 bis 10, **dadurch gekennzeichnet, dass** der Photoinitiator des UV-härtbaren Lacks geeignet ist, Licht mit einer Wellenlänge im Bereich von 360 bis 420 nm, vorzugsweise im Bereich von 390 bis 400 nm zu absorbieren.

12. Verfahren nach einem der Ansprüche 1 bis 11, **dadurch gekennzeichnet, dass** die Prägestruktur (13) in der UV-härtbaren Lackschicht (7) in der Weise ausgebildet wird, dass die Prägestruktur (13) nach der Aushärtung der Lackschicht (7) eine gemittelte Rautiefe Rz nach DIN EN ISO 4287 im Bereich von 10 bis 200 µm, vorzugsweise im Bereich von 40 bis 200 µm, besonders bevorzugt im Bereich von 100 bis 200 µm aufweist.

13. Verfahren nach einem der Ansprüche 1 bis 12, **dadurch gekennzeichnet, dass** zum Formen der Prägestruktur (13) eine Prägewalze (3, 3') verwendet wird, wobei der aus dem bahnförmigem Trägermaterial (5), der Haftvermittlerschicht (8) und der Lackschicht (7) gebildete Verbund mit einem Umschlingungswinkel im Bereich von vorzugsweise 60° bis 200°, besonders bevorzugt im Bereich von 100° bis 180° um die Prägewalze (3, 3') geführt wird.

14. Strukturgeber (17) zum Texturieren einer prägefähigen Materialoberfläche, insbesondere harzhaltigen Laminatoberfläche, insbesondere hergestellt nach einem Verfahren gemäß einem der voranstehenden Ansprüche 1 bis 13, mit einem bahnförmigen Trägermaterial (5) aus Papier und/oder Kunststoff und einer auf dem Trägermaterial (5) aufgebrachten Lackschicht (7) aus acryliertem Oligomer, die eine dreidimensionale Prägestruktur (13) aufweist, **dadurch gekennzeichnet, dass** die Lackschicht (7) über mindestens eine Haftvermittlerschicht (8) aus acryliertem Oligomer, einem Reaktivverdünner und einem auf UV-Strahlung reagierenden Photoinitiator mit dem Trägermaterial (5) verbunden ist, wobei der Strukturgeber (17) im fertigen Zustand eine mittlere Martenshärte nach DIN EN ISO 14577 im Bereich von 10 bis 80 N/mm², vorzugsweise im Bereich von 30 bis 80 N/mm² aufweist, wobei der zur Messung der Martenshärte als Prüfkörper verwendete Eindringkörper in die Oberfläche der die Prägestruktur (13) aufweisenden Lackschicht (7) gedrückt wurde.

15. Strukturgeber nach Anspruch 14, **dadurch gekennzeichnet, dass** die die Prägestruktur (13) aufweisende Lackschicht (5) nach der Aushärtung eine gemittelte Rautiefe Rz nach DIN EN ISO 4287 im Bereich von 10 bis 200 µm, vorzugsweise im Bereich von 40 bis 200 µm, besonders bevorzugt im Bereich von 100 bis 200 µm aufweist.

## Claims

1. Method for producing a structuring means (17) for texturing an embossable material surface, in particular a resin-containing laminate surface, comprising the steps of:
providing a web-like carrier material (5) made of paper and/or plastic,
applying a UV-curable lacquer layer (7) of acrylated oligomer onto the carrier material,
forming a three-dimensional embossed structure (13) into the lacquer layer (7) applied to the carrier material (5), and
curing the lacquer layer (7) by irradiation with high-energy radiation, preferably UV light, during the forming of the embossed structure (13),
**characterized in that** before the UV-curable lacquer layer (7) is applied, at least one adhesion promoter layer (8) comprising acrylated oligomer, a reactive diluent and a photoinitiator which reacts to high-energy radiation, preferably UV radiation, is applied onto the carrier material, and **in that** the lacquer layer (7) having the embossed structure (13) is cured by irradiation with high-energy radiation, preferably UV light, to such an extent that, in the finished state, the structuring means (17) has an average Martens hardness according to DIN EN ISO 14577 in the range from 10 to 80 N/mm², preferably in the range from 30 to 80 N/mm², the indenter used as a test body for measuring the Martens hardness being pressed into the surface of the lacquer layer (7) having the embossed structure (13).

2. Method according to claim 1, **characterized in that** the at least one adhesion promoter layer (8) is applied onto the carrier material (5) with a layer thickness in the range from 0.5 to 12 µm, preferably in the range from 1 to 10 µm, particularly preferably in the range from 2 to 5 µm, based on the dry state of the adhesion promoter layer (8).

3. Method according to claim 1 or 2, **characterized in that** the web-like carrier material (5) used is a web-like carrier material (5) made of paper and/or plastic which is at least partially permeable to high-energy radiation, in particular UV light, wherein the curing of the lacquer layer (7) is carried out by irradiation with high-energy radiation, preferably UV light, during the forming of the embossed structure (13) in such a way that the irradiation is carried out at least partially from the side of the carrier material (5) facing away from the embossed structure (13).

4. Method according to any one of claims 1 to 3, **characterized in that** a web of paper material is used as the web-like carrier material (5), an aqueous adhesion promoter being applied onto the carrier material (5) to produce the adhesion promoter layer (8), the adhesion promoter layer (8) being dried at least in the surface region before the UV-curable lacquer layer (7) is applied thereto, and the drying being carried out using temperatures in the range from 80° C to 160° C, preferably in the range from 90° C to 140° C, particularly preferably in the range from 100° C to 120° C.

5. Method according to any one of claims 1 to 3, **characterized in that** a plastic film is used as the web-like carrier material (5), the adhesion promoter layer (8) being cured at least to such an extent by means of high-energy radiation, preferably UV radiation, before the UV-curable lacquer layer (7) is applied onto the adhesion promoter layer (8), that the adhesion promoter layer is solid and/or substantially non-adhesive on its surface, wherein the photoinitiator of the adhesion promoter layer (8) is suitable for absorbing light with a wavelength in the range from 250 to 350 nm, preferably in the range from 270 to 330 nm, and wherein the adhesion promoter layer (8) is cured with a UV radiation dose in the range from 60 to 200 mJ/cm², preferably 100 to 160 mJ/cm².

6. Method according to any one of claims 1 to 5, **characterized in that** the adhesion promoter layer (8) contains
10 to 90% by weight, preferably 40 to 70% by weight of acrylated oligomer, at least 8% by weight, preferably at least 20% by weight of reactive diluent,
0.5 to 10% by weight of photoinitiator which reacts to UV radiation and
optionally 0.1 to 3% by weight of one or more additives from a group comprising defoamers and substrate wetting agents, the amounts of all components contained in the adhesion promoter layer adding up to 100% by weight.

7. Method according to any one of claims 1 to 6, **characterized in that** a lacquer is used for the UV-curable lacquer layer (7) which contains
30 to 95% by weight of acrylated oligomer,
10 to 70% by weight of mono- or multifunctional monomer,
1 to 5% by weight of photoinitiator, and optionally
1 to 6% by weight of one or more additives from a group comprising defoamers, substrate wetting agents, release additives, waxes and anti-settling agents,
wherein the amounts of all components contained in the UV-curable coating add up to 100% by weight.

8. Method according to any one of claims 1 to 7, **characterized in that** the adhesion promoter layer (8) and/or the lacquer used for the UV-curable lacquer layer (7) contains urethane acrylate, polyester acrylate, epoxy acrylate or a mixture of two or three of these acrylates as an acrylated oligomer.

9. Method according to any one of claims 1 to 8, **characterized in that** the UV-curable lacquer layer (7) is cured by means of at least one UV-light-emitting LED emitter, emitting a UV radiation power in the range from 8 to 16 W/cm², preferably in the range from 10 to 14 W/cm².

10. Method according to any one of claims 1 to 9, **characterized in that** the UV-curable lacquer layer is finally cured by means of at least one mercury vapour medium-pressure lamp (16) or at least one UV-C lamp, the final curing preferably being carried out using a UV radiation dose in the range from 500 to 3,000 mJ/cm².

11. Method according to any one of claims 1 to 10, **characterized in that** the photoinitiator of the UV-curable lacquer is suitable for absorbing light with a wavelength in the range from 360 to 420 nm, preferably in the range from 390 to 400 nm.

12. Method according to any one of claims 1 to 11, **characterized in that** the embossed structure (13) is formed in the UV-curable lacquer layer (7) in such a way that, after curing of the lacquer layer (7), the embossed structure (13) has an average roughness depth Rz according to DIN EN ISO 4287 in the range from 10 to 200 µm, preferably in the range from 40 to 200 µm, particularly preferably in the range from 100 to 200 µm.

13. Method according to any one of claims 1 to 12, **characterized in that** an embossing roller (3, 3') is used to form the embossed structure (13), the composite formed from the web-like carrier material (5), the adhesion promoter layer (8) and the lacquer layer (7) being guided around the embossing roller (3, 3') with a wrap angle in the range from preferably 60° to 200°, particularly preferably in the range from 100° to 180°.

14. Structuring means (17) for texturing an embossable material surface, in particular a resin-containing laminate surface, in particular produced by a method according to any one of the preceding claims 1 to 13, with a web-like carrier material (5) made of paper and/or plastic and a lacquer layer (7) made of acrylated oligomer applied to the carrier material (5), which has a three-dimensional embossed structure (13), **characterized in that** the lacquer layer (7) is joint to the carrier material (5) via at least one adhesion promoter layer (8) made of acrylated oligomer, a reactive diluent and a photoinitiator which reacts to UV radiation, the structuring means (17) having, in the finished state, an average Martens hardness according to DIN EN ISO 14577 in the range from 10 to 80 N/mm², preferably in the range from 30 to 80 N/mm², the indenter used as a test body for measuring the Martens hardness having been pressed into the surface of the lacquer layer (7) having the embossed structure (13).

15. Structuring means according to claim 14, **characterized in that** the lacquer layer (5) having the embossed structure (13) has, after curing, an average roughness depth Rz according to DIN EN ISO 4287 in the range from 10 to 200 µm, preferably in the range from 40 to 200 µm, particularly preferably in the range from 100 to 200 µm.

## Revendications

1. Procédé de fabrication d'un agent structurant (17) pour texturer une surface de matière pouvant être estampée, plus particulièrement une surface stratifiée contenant de la résine, comprenant les étapes de :
mise à disposition d'un matériau de support en forme de bande (5) en papier et/ou en matière synthétique,
application d'une couche de vernis durcissable aux UV (7) en oligomère acrylé sur le matériau de support,
formation d'une structure d'estampage tridimensionnelle (13) dans la couche de vernis (7) appliquée sur le matériau de support (5) et
durcissement de la couche de vernis (7) par irradiation avec un rayonnement à haute énergie, de préférence une lumière UV, pendant la formation de la structure d'estampage (13),
**caractérisé en ce qu'**avant l'application de la couche de vernis durcissable aux UV (7) au moins une couche d'agent de pontage (8) composée d'oligomère acrylé, d'un diluant réactif et d'un photoinitiateur réagissant au rayonnement à haute énergie, de préférence au rayonnement UV, est appliquée sur le matériau de support, et **en ce que** la couche de vernis (7) présentant la structure d'estampage (13) est durcie par irradiation avec un rayonnement à haute énergie, de préférence une lumière UV, de manière à ce que l'agent structurant (17) présente à l'état fini une dureté Martens moyenne selon la norme DIN EN ISO 14577 de l'ordre de 10 à 80 N/mm², de préférence de l'ordre de 30 à 80 N/mm², dans lequel le poinçon utilisé comme échantillon pour mesurer la dureté Martens est enfoncé dans la surface de la couche de vernis (7) présentant la structure d'estampage (13).

2. Procédé selon la revendication 1, **caractérisé en ce que** la au moins une couche d'agent de pontage (8) ayant une épaisseur de couche de l'ordre de 0,5 à 12 µm, de préférence de l'ordre de 1 à 10 µm, de préférence encore de l'ordre de 2 à 5 µm, par rapport à l'état sec de la couche d'agent de pontage (8), est appliquée sur le matériau de support (5).

3. Procédé selon la revendication 1 ou 2, **caractérisé en ce que** comme matériau de support en forme de bande (5) est utilisé un matériau de support en forme de bande (5), en papier et/ou en matière synthétique, au moins partiellement transparent pour un rayonnement à haute énergie, plus particulièrement pour une lumière UV, dans lequel le durcissement de la couche de vernis (7) est effectué par irradiation avec un rayonnement à haute énergie, de préférence une lumière UV, pendant la formation de la structure d'estampage (13) d'une manière telle que le rayonnement a lieu au moins partiellement à partir du côté opposé à la structure d'estampage (13) du matériau de support (5).

4. Procédé selon l'une des revendications 1 à 3, **caractérisé en ce que** comme matériau de support en forme de bande (5) est utilisée une bande de matériau en papier, dans lequel pour fabriquer la couche d'agent de pontage (8) est appliqué un agent de pontage aqueux sur le matériau de support (5), dans lequel la couche d'agent de pontage (8) est séchée au moins dans la zone de surface avant l'application de la couche de vernis durcissable aux UV (7) sur celle-ci, et dans lequel le séchage est effectué en appliquant des températures de l'ordre de 80°C à 160°C, de préférence de l'ordre de 90°C à 140°C, de préférence encore de l'ordre de 100°C à 120°C.

5. Procédé selon l'une des revendications 1 à 3, **caractérisé en ce que** comme matériau de support en forme de bande (5) est utilisée une feuille de matière synthétique, dans lequel la couche d'agent de pontage (8), avant l'application de la couche de vernis durcissable aux UV (7) sur la couche d'agent de pontage (8), est durcie au moyen d'un rayonnement à haute énergie, de préférence d'un rayonnement UV au moins jusqu'à ce que la couche d'agent de pontage soit solide et/ou essentiellement non collante sur sa surface, dans lequel le photoinitiateur de la couche d'agent de pontage (8) est approprié pour absorber de la lumière ayant une longueur d'onde de l'ordre de 250 à 350 nm, de préférence de l'ordre de 270 à 330 nm, et dans lequel la couche d'agent de pontage (8) est durcie avec une dose de rayonnement UV de l'ordre de 60 à 200 mJ/cm², de préférence de 100 à 160 mJ/cm².

6. Procédé selon l'une des revendications 1 à 5, **caractérisé en ce que** la couche d'agent de pontage (8) contient
10 à 90 % en poids, de préférence 40 à 70 % en poids d'oligomère acrylé,
au moins 8 % en poids, de préférence au moins 20 % en poids de diluant réactif, 0,5 à 10 % en poids de photoinitiateur réagissant au rayonnement UV et facultativement, 0,1 à 3 % en poids d'un ou de plusieurs additifs d'un groupe comprenant des agents antimoussants et des agents mouillants de substrat, dans lequel les quantités de tous les composants contenus dans la couche d'agent de pontage s'élèvent au total à 100 % en poids.

7. Procédé selon l'une des revendications 1 à 6, **caractérisé en ce que** pour la couche de vernis durcissable aux UV (7) est utilisé un vernis qui contient
30 à 95 % en poids d'oligomère acrylé,
10 à 70 % en poids de monomère mono ou multifonctionnel,
1 à 5 % en poids de photoinitiateur, et facultativement
1 à 6 % en poids d'un ou de plusieurs additifs d'un groupe comprenant des agents antimoussants, des agents mouillants de substrat, des additifs de séparation, des cires et des agents antisédimentation, dans lequel les quantités de tous les composants contenus dans le vernis durcissable aux UV s'élèvent au total à 100 % en poids.

8. Procédé selon l'une des revendications 1 à 7, **caractérisé en ce que** la couche d'agent de pontage (8) et/ou le vernis utilisé pour la couche de vernis durcissable aux UV (7) contient comme oligomère acrylé un uréthane-acrylate, un polyester-acrylate, un époxy-acrylate ou un mélange de deux ou trois de ces acrylates.

9. Procédé selon l'une des revendications 1 à 8, **caractérisé en ce que** la couche de vernis durcissable aux UV (7) est durcie au moyen d'au moins un projecteur à LED émettant une lumière UV en dégageant une puissance de rayonnement UV de l'ordre de 8 à 16 W/cm², de préférence de l'ordre de 10 à 14 W/cm².

10. Procédé selon l'une des revendications 1 à 9, **caractérisé en ce que** la couche de vernis durcissable aux UV subit un durcissement final au moyen d'au moins une lampe à moyenne pression à vapeur de mercure (16) ou d'au moins une lampe UV-C, dans lequel le durcissement final est exécuté de préférence en appliquant une dose de rayonnement UV de l'ordre de 500 à 3000 mJ/cm².

11. Procédé selon l'une des revendications 1 à 10, **caractérisé en ce que** le photoinitiateur du vernis durcissable aux UV est approprié pour absorber une lumière ayant une longueur d'onde de l'ordre de 360 à 420 nm, de préférence de l'ordre de 390 à 400 nm.

12. Procédé selon l'une des revendications 1 à 11, **caractérisé en ce que** la structure d'estampage (13) dans la couche de vernis durcissable aux UV (7) est conçue de sorte que la structure d'estampage (13) après le durcissement de la couche de vernis (7) présente une rugosité moyenne de surface Rz selon la norme DIN EN ISO 4287 de l'ordre de 10 à 200 µm, de préférence de l'ordre de 40 à 200 µm, de préférence encore de l'ordre de 100 à 200 µm.

13. Procédé selon l'une des revendications 1 à 12, **caractérisé en ce qu'**un cylindre gaufreur (3, 3') est utilisé pour former la structure d'estampage (13), dans lequel le composé formé à partir du matériau de support en forme de bande (5), de la couche d'agent de pontage (8) et de la couche de vernis (7) est guidé autour du cylindre gaufreur (3, 3') avec un angle de contact de préférence de l'ordre de 60° à 200°, de préférence encore de l'ordre de 100° à 180°.

14. Agent structurant (17) pour texturer une surface de matière pouvant être estampée, plus particulièrement une surface stratifiée contenant de la résine, plus particulièrement fabriqué selon un procédé selon l'une des revendications précédentes 1 à 13, avec un matériau de support en forme de bande (5) en papier et/ou matière synthétique et une couche de vernis (7) appliquée sur le matériau de support (5) en oligomère acrylé, qui présente une structure d'estampage tridimensionnelle (13), **caractérisé en ce que** la couche de vernis (7) est liée au matériau de support (5) par au moins une couche d'agent de pontage (8) composée d'un oligomère acrylé, d'un diluant réactif et d'un photoinitiateur réagissant au rayonnement UV, dans lequel l'agent structurant (17) à l'état fini présente une dureté Martens moyenne selon la norme DIN EN ISO 14577 de l'ordre de 10 à 80 N/mm², de préférence de l'ordre de 30 à 80 N/mm², dans lequel le poinçon utilisé comme échantillon pour mesurer la dureté Martens a été enfoncé dans la surface de la couche de vernis (7) présentant la structure d'estampage (13).

15. Agent structurant selon la revendication 14, **caractérisé en ce que** la couche de vernis (5) présentant la structure d'estampage (13) présente après le durcissement une rugosité moyenne de surface Rz selon la norme DIN EN ISO 4287 de l'ordre de 10 à 200 µm, de préférence de l'ordre de 40 à 200 µm, de préférence encore de l'ordre de 100 à 200 µm.
